# EUROPEAN PATENT SPECIFICATION

(11) **EP 4 307 011 B1**
(45) Date of publication and mention of the grant of the patent: **04.11.2026**
(21) Application number: 23183124.9
(22) Date of filing: 03.07.2023
(51) Int. Cl.: G01S 19/21, G01S 19/20

(54) **SYSTEM FOR LOCAL AREA DETECTION AND ALERTING OF GLOBAL NAVIGATION SATELLITE SYSTEM (GNSS) SPOOFING**
SYSTEM ZUR LOKALEN BEREICHSERKENNUNG UND WARNUNG VOR SPOOFING EINES GLOBALEN NAVIGATIONSSATELLITENSYSTEMS (GNSS)
SYSTÈME DE DÉTECTION DE ZONE LOCALE ET D'ALERTE DE MYSTIFICATION DE SYSTÈME MONDIAL DE NAVIGATION PAR SATELLITE (GNSS)

(30) Priority: 12.07.2022 US 202263388327 P; 16.03.2023 US 202318122531
(43) Date of publication of application: 17.01.2024
(73) Proprietor: Rockwell Collins, Inc., Cedar Rapids, IA 52498 (US)
(72) Inventor: JOSEPH, Angelo J., Melbourne (US); FRANK, Robert J., Indialantic (US)
(74) Representative: Dehns

(56) References cited:
- US-A- 5 627 546
- US-A- 5 786 773
- US-B2- 9 952 326

## Description

### BACKGROUND

Global navigation satellite systems (GNSS; e.g., GPS, GLONASS, BeiDou, Galileo, IRNSS/NavIC, QZSS) provide critical navigation and landing services for all classes of aircraft. Aircraft on approach to a landing at an airport runway particularly require the precision accuracy and trustworthy integrity of GNSS-driven positioning to utilize enhanced navigation and landing tools, e.g., Localizer Performance with Vertical Guidance (LPV, LPG), Required Navigation Performance (RNP, RPG), Ground Based Augmentation System (GBAS, including GBAS Landing System (GLS)). However, aircraft operations may be inconvenienced or threatened by the increasing presence of military or commercial jammers and spoofers. For example, jammers and spoofers may drive interference or errors into the GNSS system. Aircraft, in turn, must account for these attacks on system integrity when computing protection bounds for their position outputs (in addition to other threats, e.g., satellite failures, atmospheric anomalies, multipath errors). Further, there are currently no available models for predicting prior probability of spoofer/jammer presence within a given airspace. The conservative approach, then, is to assume that spoofers and jammers are always present, and inflate protection levels accordingly. However, higher protection levels reduce the availability of, or may preclude entirely, navigational and landing operations as described above.

US 5786773 A discloses an aircraft local-area augmentation system that employs a differential global positioning system (GPS) to assist aircraft landing. The system comprises a method of transmitting a digital signature from a GPS ground station to an aircraft, in order to authenticate transmitted messages, thereby detecting spoofing.

US 9952326 B2 A discloses a ground-based system to reduce the effect of interference, comprising a plurality of reference receivers, wherein the reference receivers are spaced a distance apart such that a single source of interference is unable to substantially interfere with a subset of the plurality of reference receivers.

US 5627546 A discloses a combined ground and satellite system for global aircraft surveillance, navigation, landing guidance and collision avoidance which comprises a satellite subsystem consisting of both a satellite constellation and associated ground stations, and a ground subsystem consisting of a network of ground stations, together with an airborne subsystem comprised of a transponder unit located in each of the aircraft using the system.

### SUMMARY

According to a first aspect of the invention, a system for local area detection and alerting of global navigation satellite system (GNSS) spoofing (LDAS) is provided as recited in claim 1.

Further, optional features are recited in dependent claims 2 to 11.

According to another aspect of the invention, a method for local area detection and alerting of global navigation satellite system (GNSS) spoofing (LDAS) is provided as recited in claim 12.

Further, optional features are recited in dependent claim 13 to 15.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a diagrammatic illustration of a local-area detection and alerting of GNSS spoofer (LDAS) system and protected airspace architecture according to example embodiments of this disclosure;
FIG. 2 is a block diagram of the LDAS system/protected airspace architecture of FIG. 1;
FIG. 3 is a diagrammatic illustration of the LDAS system/protected airspace architecture of FIG. 1 showing active and inactive reference receiver stations;
FIG. 4 is a diagrammatic illustration of an embodiment of an LDAS system architecture according to example embodiments of this disclosure;
and FIGS. 5A through 5C are flow diagrams illustrating a method for local area detection and alerting of potential GNSS spoofing (LDAS) according to example embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, embodiments of the inventive concepts disclosed herein are directed to a system and method for monitoring an airspace for potential GNSS spoofers, as well as notifying any aircraft operating in the airspace whether the presence of spoofers may be safely ignored, allowing the aircraft to use standard threat models associated with lower protection levels. The protected airspace may include a line-of-sight (LOS) volume extending far beyond the conventional operating space for GBAS (approximately 23 NM/42 km) to incorporate aircraft scheduled to land at an airport but which have not yet commenced a formal approach procedure (or where GBAS services may not exist). Based on, for example, elevation of GNSS signal receivers and surrounding terrain, the protected airspace may extend 100 NM or farther around an associated airport. For example, any aircraft entering the protected airspace may auto-tune its multi-mode receivers (MMR) to a dedicated VDB frequency and receive regular updates as to the likely presence of spoofers within the protected airspace, monitoring and adjusting their protection levels accordingly.

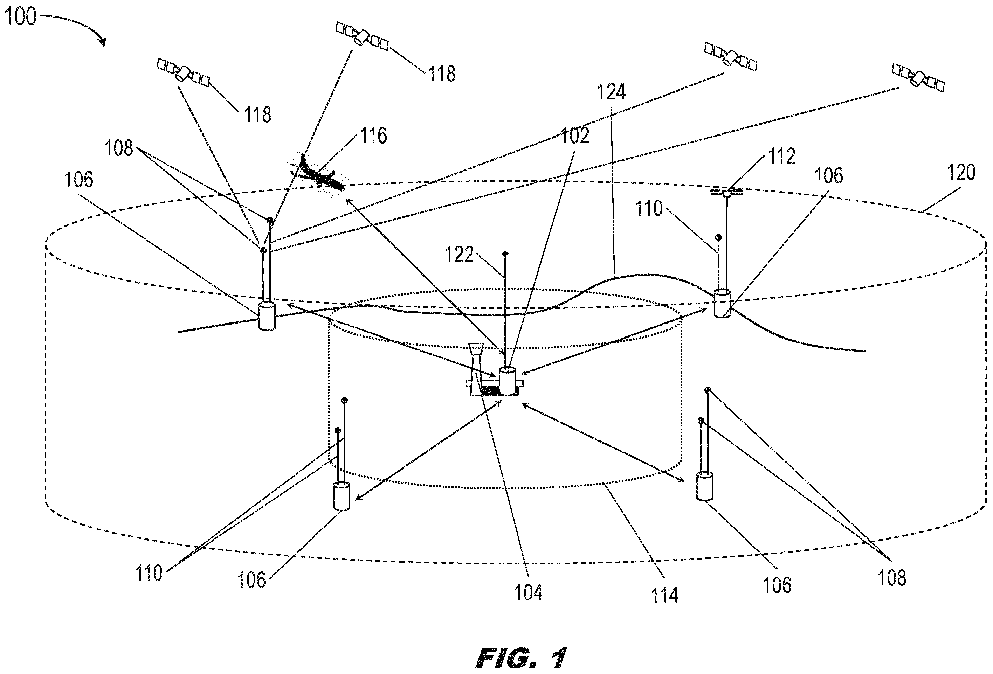

Referring now to FIG. 1, a local-area detection and alerting of global navigation satellite system (GNSS) spoofers (LDAS) system 100 is shown. The LDAS system 100 includes a master control station 102 (e.g., which may be embodied at or near an airport 104 or other point of interest) and auxiliary radio frequency interference (RFI) control stations 106. Each RFI control station 106 includes reference GNSS signal receivers 108, e.g., mounted to elevated receiving (Rx) antennas 110 or other elevated structures, or to tethered drones 112 (partially or fully autonomous unmanned aerial vehicles (UAV)).

The LDAS system 100 establishes and maintains a protection region 114 (e.g., protected airspace, coverage volume) surrounding the airport 104, master control station 102, or other point of interest. For example, the protection region 114 may comprise an airspace surrounding the airport 104 to at least a defined radius or defined boundaries, e.g., 100 or 200 miles, and to a defined altitude. In embodiments, the precise size of the protection region 114 may at least partially depend on fixed and dynamic factors, e.g., terrain conditions (natural and/or manmade obstacles) or atmospheric conditions (wind, weather, precipitation) in the vicinity of the airport 104. Similarly, the effective size of the protection region 114 may be defined by visual line of sight (LOS, VLOS) relative to one or more of the elevated GNSS signal receivers 108. For example, the higher the elevated Rx antennas 110, the greater their LOS range and, broadly speaking, the greater the range of the LDAS system 100 (which may also be based on, e.g., the strength of the elevated GNSS signal receivers 108).

In embodiments, under ideal atmospheric conditions the practical size of the protection region 114 (equivalent to the effective range of the LDAS system 100) may extend farther than its defined radius; however, the defined radius may serve to aircraft 116 (e.g., air traffic whose flight plans terminate at the airport 104 or traverse the protection region) as an assurance of LDAS system 100 performance within its defined bounds, e.g., a minimum region of assured protection.

In embodiments, the effective size of the protection region 114 may extend beyond standard approach patterns for aircraft 116 intending to land at the airport 104; similarly, the effective range of the LDAS system 100 may extend beyond that of landing and navigation aids associated with approach and landing procedures associated with the airport. For example, Ground Based Augmentation System (GBAS) services may be available to local-area aircraft 116 substantially within a ~23 NM coverage of the airport 104, in order to provide navigational support (e.g., corrections to position errors associated with GNSS or other like navigational satellites 118) as the aircraft transition from en-route airspace (e.g., cruise or initial descent segments) into approach and landing procedures. In embodiments, the LDAS system 100 may extend the protection region 114 beyond the effective coverage area of GBAS services (based, for example, on LOS range provided by the height of the elevated Rx antennas 110). Alternatively, the LDAS system 100 may provide a protection region 114 in areas where GBAS services are unavailable and for which no formal approach procedures are necessary. Further, in some embodiments the master control station 102 may provide regular updates as to the likely presence or absence of GNSS spoofers within the protection region 114 throughout an even larger transmission region 120 extending beyond the protection region. For example, the transmission region 120 is at least partially defined by a LOS range of a transmitting (Tx) antenna 122 of the master control station 102. Any aircraft 116 entering the transmission region 120 may be able to auto-tune its multi-mode receivers (MMR) to a dedicated frequency for regular updates as to the likely presence or absence of GNSS spoofers within the protection region 114, as described in greater detail below.

In some embodiments, the LDAS system 100 may not maintain a separate master control station 102 at or near the airport 104 or site of interest, but may designate an RFI control station 106 (e.g., sufficiently configured for VHF data broadcast (VDB) transmission as discussed below) as the master control station. Similarly, in some embodiments the LDAS system 100 may maintain a master control station 102 not disposed at or near the airport 104 or site of interest; for example, a master control station 102 may be remotely located from, but in communicative control of, multiple implementations of the LDAS system 100.

In embodiments, the effective size of the protection region 114 and the effective range of the LDAS system 100 may be determined in part by the placement of each RFI control station 106. Each RFI control station 106 includes one or more elevated GNSS signal receivers 108, each GNSS signal receiver coupled to two or more Rx antennas 110. Each Rx antenna 110 is associated with a fixed and precision surveyed true location, e.g., stored to memory and/or known to control processors associated with the RFI control station 106, to each GNSS signal receiver 108 of the control center, and/or to the master control station 102. For example, the true location of an Rx antenna 110 may correspond to latitude, longitude, and altitude of antenna elements via which positioning signals are received from constellations of GNSS navigational satellites 118. The true location of each Rx antenna 110 may include an altitude or height distinct from every other Rx antenna at a given RFI control station 106.

Each GNSS signal receiver 108 continually determines an absolute position of each Rx antenna 110 to which the receiver is connected, based on a set of positioning signals received via the set of antenna elements corresponding to each Rx antenna. Each GNSS signal receiver 108 compares the determined absolute position of each Rx antenna 110 to the true location of that Rx antenna. If, for example, the determined absolute positions of all Rx antennas 110 correspond to their true locations within an accuracy confidence bound (e.g., 99.999% or 10⁻⁴), and the determined absolute positions are free of measurement errors or other anomalies affecting measurement accuracy, the GNSS signal receivers at that RFI control stations may determine the current probability of GNSS spoofer presence to be substantially zero. In embodiments, the RFI control station 106 may notify the master control station 102 of the zero probability.

In embodiments, one or more GNSS-driven absolute positions of an Rx antenna 110 determined by a GNSS signal receiver 108 may deviate from the true location of the Rx antenna, which may or may not be attributable to GNSS spoofing. For example, the GNSS signal receiver may incorporate one or more measurement consistency checks in an attempt to determine, to a sufficient level of confidence (e.g., beyond a predetermined confidence bound), that deviations of determined absolute position from true location are caused by GNSS spoofing as opposed to measurement errors or anomalies. If multiple determinations by a GNSS signal receiver 108 of an absolute position of an Rx antenna 110 are deviant but mutually consistent, this may increase the confidence level that the deviations are caused by GNSS spoofing rather than measurement error. In embodiments, the GNSS signal receiver 108 or RFI control station 106 may report to the master control station 102 deviations of determined absolute positions of an Rx antenna 110 from the true location of the Rx antenna, but may not be able to determine with sufficient confidence that GNSS spoofing is present. Alternatively, measurement consistency checks may establish to at least the predetermined confidence bound that deviations are due to GNSS spoofing, and the GNSS signal receiver 108 may indicate a nonzero probability of spoofer presence.

In embodiments, if an RFI control station 106 reports a nonzero probability of GNSS spoofing, the master control station 102 or RFI control station 106 may alert any aircraft 116 operating within the transmission region 120 (and having auto-tuned to the appropriate VDB frequency) to the potential presence of snoopers or jammers within the protection region 114, so the aircraft may adjust GNSS protection levels accordingly. For example, if a nonzero probability of GNSS spoofing associated with a particular RFI control station 106 persists for a sufficient duration, or if multiple RFI control stations report a nonzero probability of spoofing, the master control station 102 may determine that spoofers or jammers are present. In embodiments, the master control station 102 may transmit LDAS or spoofer detection updates (e.g., via VDB transmissions through the Tx antenna 122, as described below) continually at regular time intervals. If, for example, no RFI control station 106 reports a nonzero probability of GNSS spoofing during the time interval between LDAS update transmissions, the next transmission may note a zero probability of GNSS spoofing presence. For example, the VDB transmission may indicate (e.g., via appropriate VDB coding as described below) that no significant deviations were reported, or that deviations may have been detected but could not with sufficient confidence be attributed to GNSS spoofing. Alternatively, if one or more RFI control stations 106 reports a nonzero probability of GNSS spoofing during the time interval, the next transmission may note the nonzero probability of spoofing. In some embodiments, regular transmissions by the master control station 102 may include additional information, e.g., the confidence bound used for measurement consistency. Accordingly, aircraft 116 operating within the protection region 114 may elect to adjust GNSS protection levels (e.g., consistent with models not accounting for the presence of spoofers) to facilitate use of landing and/or navigational aids in conjunction with approach and landing procedures.

In some embodiments, the master control station 102 and/or RFI control station 106 may alert aircraft 116 operating within the protection region 114 with regular LDAS updates transmitted via GBAS messaging infrastructure. For example, GBAS services (where available) may communicate with aircraft 116 via VHF data broadcast (VDB) transmitters at assigned frequencies or channels within the VHF band (e.g., 108.025 - 117.950 MHz for GBAS messages). GBAS transmissions may include various message types differentiated by a message identifier; for example, of 255 possible GBAS message identifiers, types 1-5 are associated with specific message types. In embodiments, the LDAS system 100 may provide LDAS updates to aircraft 116 via unused GBAS message types (e.g., a first message type indicative of spoofers present, a second message type indicative of nominal or all-clear conditions) over assigned unused GBAS frequencies or channels (e.g., including areas where GBAS services may not otherwise be available). For example, the master control station 102 of the LDAS system 100 may be associated with a specific GBAS frequency to which any aircraft 116 may automatically tune their multi-mode receivers (MMR) when entering the transmission region 120 in order to receive regular LDAS updates.

In embodiments, the effective range of the LDAS system 100 and/or the effective size of the protection region 114 may be increased by elevating the GNSS signal receivers 108 of each RFI control station 106, thereby increasing the LOS/VLOS range of each receiver. For example, the GNSS signal receivers 108 may be mounted atop antennas 110 or other elevated structures extending at least a minimum height above ground, based on the terrain 124 in the vicinity of a given RFI control station 106 (manmade or natural obstacles may obscure the LOS/VLOS range of one or more GNSS signal receivers). In some embodiments, GNSS signal receivers may be disposed aboard tethered drones 112 secured to a fixed structure and configured to hover at a fixed, predetermined altitude consistent with the true location and distinct height of the Rx antenna 110.

In some embodiments, the LDAS system 100 may store to memory (e.g., at the master control station 102 or at one or more RFI control stations 106) indexed records of any potential spoofers or jammers detected by a particular RFI control station (e.g., along with any relevant data such as time of day, atmospheric conditions, air traffic levels, nature of the position deviation, etc.). For example, the LDAS system 100 may advise aircraft 116 operating within the transmission region 120 of a potential spoofer or jammer within the protection region 114 based on historical data that suggest a pattern.

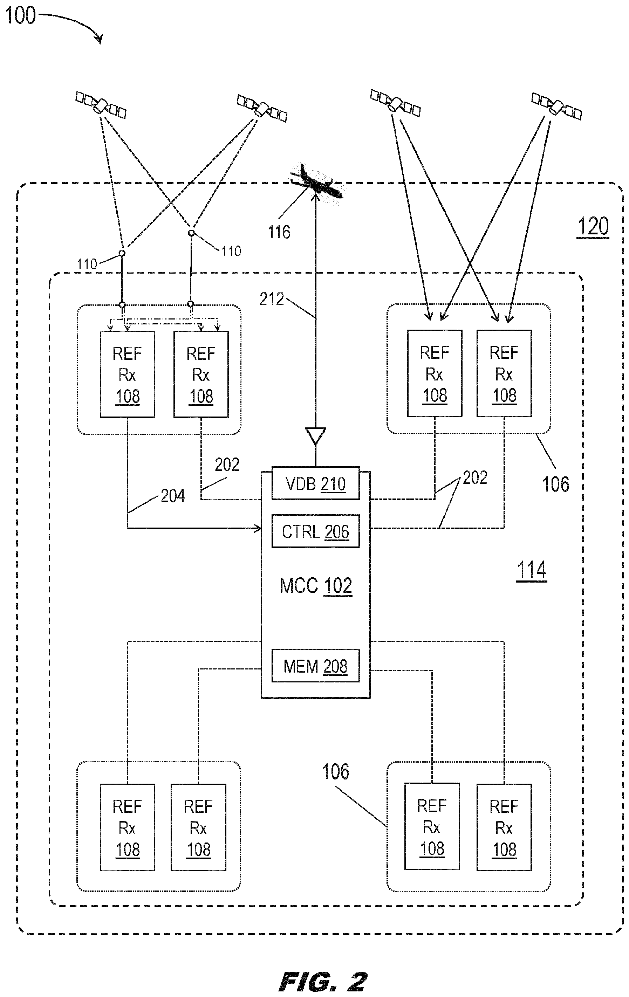

Referring now to FIG. 2, the LDAS system 100 is shown.

Each RFI control station 106 includes at least two reference GNSS signal receivers 108 each coupled to at least two Rx antennas 110, each Rx antenna corresponding to a surveyed true location. For example, each RFI control station 106 and/or reference GNSS signal receiver 108 may maintain a communications link 202 to the master control station 102, periodically transmitting to the master control station under nominal conditions to indicate that all GNSS signal receivers, as well as GNSS services, associated with that RFI control station 106 are operating normally without threat of spoofing or jamming (e.g., zero probability).

In embodiments, if an RFI control station 106 determines a position deviation, measurement error, GNSS service outage, or nonzero probability of GNSS spoofer/jammer presence within the protection region 114 (e.g., within an effective range of that RFI control station), the RFI control station may promptly transmit an alert message 204 to the master control station 102. For example, an alert message may identify the detecting RFI control station 106, applicable confidence bound/s, and/or any other pertinent data establishing the detected spoofer, e.g., the true location of the receiver, the determined GNSS-driven absolute positions, a date and time, atmospheric conditions, directional information of a detected spoofer transmission (as described below), etc.

The master control station 102 includes control processors 206, memory 208, and VDB transmitter 210. (In some embodiments, one or more RFI control stations 106 may additionally incorporate control processors, memory, and/or VDB transmitter as discussed above). For example, the control processors 206 may analyze each received alert message 204 to verify that the probability of GNSS spoofing presence is nonzero, or that a spoofer has been detected. In embodiments, if the master control station 102 concurs with the determination of a nonzero probability of GNSS spoofing or jamming by the RFI control station 106, the master control station may broadcast an alert 212 (e.g., a regular VDB transmission indicating the nonzero probability of spoofing within the protection region 114, rather than a nominal or zero probability) to any aircraft 116 operating within the transmission region 120 via the VDB transmitter 210 (e.g., at a designated LDAS or GBAS frequency, and via unused GBAS messaging, as described above).

In embodiments, the master control station 102 may index and store to memory 208 all alert (e.g., nonzero probability) messages 204 (and all-clear nominal conditions messages) sent by each reference GNSS signal receiver 108, e.g., for analysis of historical trends or patterns.

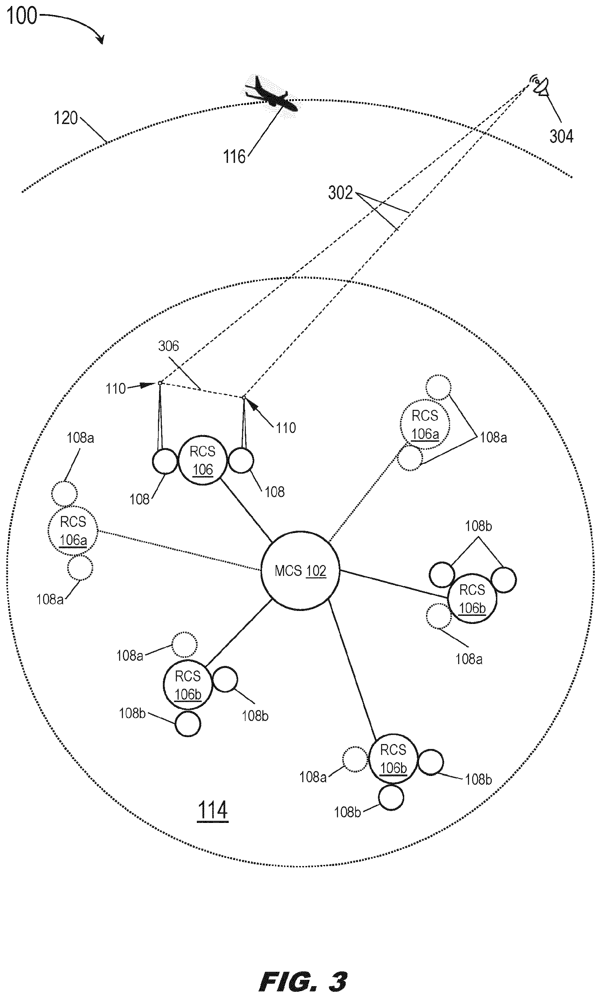

Referring to FIG. 3, the LDAS system 100 is shown.

In some embodiments, the LDAS system 100 may incorporate multiple RFI control stations 106 but randomly select from the pool of available RFI control stations or GNSS signal receivers 108 a set of active RFI control stations and/or active GNSS signal receivers. For example, the pool of active RFI control stations 106 and/or active GNSS signal receivers 108 may refresh at predetermined or random intervals, e.g., with the master control station 102 selecting a new list of active RFI control stations and/or receivers.

In embodiments, the selection of active RFI control stations 106 and/or active GNSS signal receivers 108 may be randomized so long as the placement of active control stations and/or GNSS signal receivers for any given time window maintains a consistent minimum size of the protection region 114. For example, the RFI control station 106 may be designated a fully active control station, e.g., in that both reference GNSS signal receivers 108 may monitor the protection region 114 during the appointed time window. Similarly, the RFI control station 106a may be designated a fully inactive control stations, e.g., in that all GNSS signal receivers 108a associated with that control station may remain inactive until the next selection. Further, the RFI control stations 106b may be designated partially active control stations, e.g., in that selected GNSS signal receivers 108b may remain active while other GNSS signal receivers 108a may be temporarily inactive until the next selection at least. In embodiments, any partially active RFI control station 106b may maintain at least two active GNSS signal receivers 108b.

In some embodiments, an RFI control station 106 determining a nonzero probability of GNSS spoofing presence may attempt to detect and locate an associated GNSS spoofer transmission 302 and/or its source 304. For example, the GNSS signal receivers 108 and Rx antennas 110 at the RFI control station 106 may perform angle of arrival measurements on a detected spoofer transmission 302 based on, e.g., the distinct heights of each Rx antenna, known angles and distances 306 between the Rx antennas, and variations in arrival times of the spoofer transmission at each Rx antenna. Accordingly, any direction and/or distance information of the spoofer transmission source 304 relative to the Rx antennas 110 and/or the RFI control station 106 may be forwarded to the master control station 102. In embodiments, the master control station 102 may correlate received direction and/or distance information with similar information received from other active RFI control stations 106b (or from other LDAS system networks) to more precisely identify or locate the spoofer transmission source 304. Further, the master control station 102 may include the directional and/or distance information in VDB transmissions indicating the nonzero probability of GNSS spoofer presence.

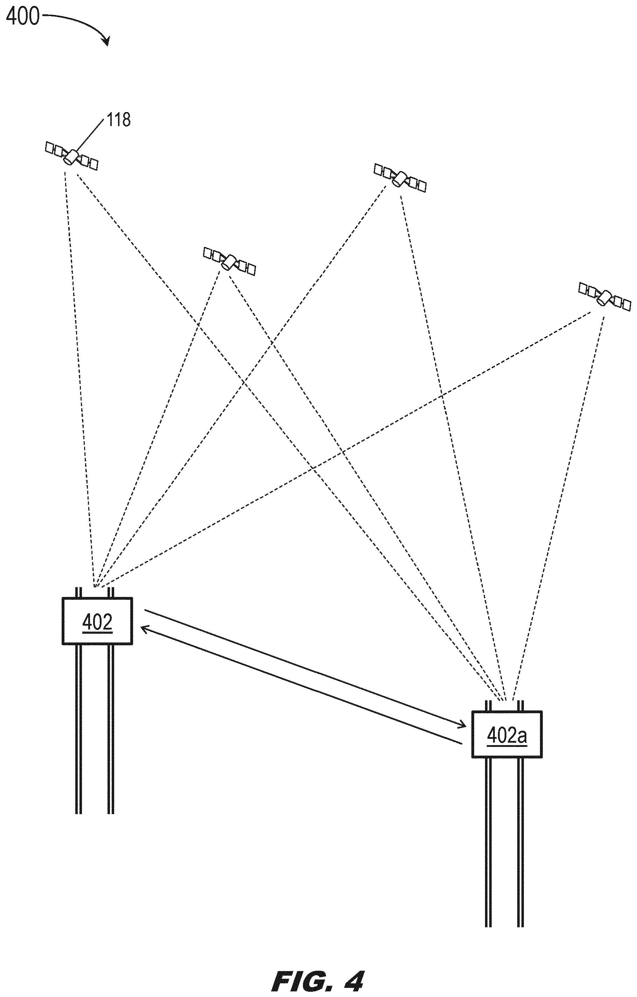

Referring now to FIG. 4, the LDAS system 400 may be implemented and may function similarly to the LDAS system 100 of FIGS. 1 through 3, except that the LDAS system 400 may incorporate one or more integrated LDAS control stations 402.

In embodiments, each LDAS control station 402 may incorporate a receiver/transmitter having a surveyed true location. For example, the LDAS control station 402 may similarly be mounted to or atop an Rx antenna (110, FIG. 1) at a true location and height above ground. Alternatively, the LDAS control station 402 may be embodied aboard a tethered drone (112, FIG. 1) hovering at a target altitude consistent with a true location.

In embodiments, the LDAS control station 402 may similarly determine its absolute position based on GNSS positioning signals received from navigational satellites 118, comparing the determined absolute position to its true location. If, for example, the absolute position sufficiently deviates from the true location, and the deviation/s can be attributed to GNSS spoofing with sufficient confidence, the LDAS control station 402 may determine a nonzero probability of GNSS spoofer presence and notify other LDAS control stations 402a of the LDAS system 400, e.g., via VDB transmission. In some embodiments, in contrast with multi-receiver, multi-antenna RFI control stations (106, FIG. 1), consistency among a group or series of determined absolute positions that deviate from the true location may serve as a further indicator of GNSS spoofer presence.

In embodiments, the LDAS system 400 may comprise a network of interconnected lower-overhead control stations 402, 402a, each control station combining master control and RFI control functions in a smaller, lighter, more cost-effective package. For example, the control stations 402, 402a of the LDAS system 400 may share information throughout the network and, e.g., with a master control station (102, FIG. 1) that may correlate individual determinations of zero or nonzero probability by individual LDAS control stations 402, 402a to more precisely detect and/or identify GNSS spoofer transmissions (302, FIG. 3) and/or their sources (304, FIG. 3).

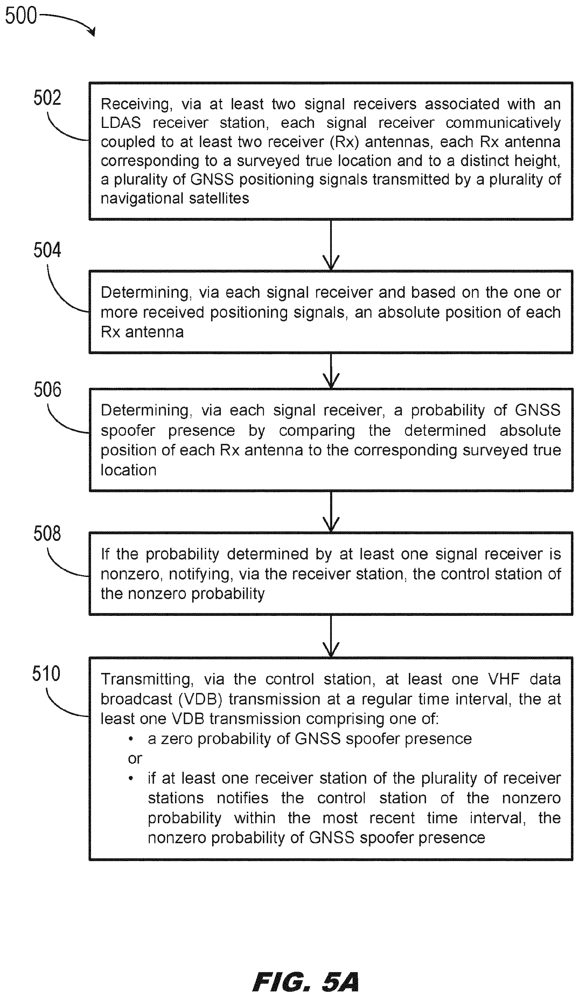

Referring now to FIG. 5A, the method 500 may be implemented by the LDAS system 100 and may include the following steps.

At a step 502, two or more reference GNSS signal receivers of an RFI control station of the LDAS system receive position and timing signals from navigational satellites via two or more Rx antennas in communication with each signal receiver, each Rx antenna having a surveyed true location and a fixed height distinct from all other Rx antennas at that RFI control station. For example, each reference GNSS signal receiver may be mounted atop an Rx antenna or other fixed structure at least a minimum height above ground (e.g., the minimum height corresponding to a minimum assured effective range of the LDAS and/or minimum assured size of the LDAS protection region), or mounted aboard tethered unmanned aerial vehicles hovering at a minimum height or greater at the surveyed location.

At a step 504, each signal receiver determines a GNSS-driven absolute position of each Rx antenna based on the received position and timing signals.

At a step 506, each signal receiver compares the determined absolute position of each Rx antenna with the true location of that Rx antenna to determine a probability of GNSS spoofer presence. For example, if one or more determined absolute positions of an Rx antenna deviate from the true location of the Rx antenna, and the deviations can be attributed to GNSS spoofing with sufficient confidence (as opposed to, e.g., measurement errors or other anomalies), the signal receivers may conclude that the probability of spoofer presence is nonzero. Otherwise, if all absolute positions of an Rx antenna are consistent with the true location, the signal receivers may conclude that the probability of spoofer presence is zero.

At a step 508, if the determined probability of potential GNSS spoofing or jamming is nonzero, the RFI control station notifies the LDAS master control station of the nonzero probability. For example, the probability of potential GNSS spoofing or jamming may be zero/nonzero, or may be determined to be one of a sequence of discrete or continuous probabilities between zero and one (e.g., deviations of determined absolute positions from true locations may be found, but may not be sufficiently attributable to GNSS spoofing to meet confidence bounds). In some embodiments, the notification includes additional pertinent information, e.g., the associated accuracy confidence bound, actual measurements taken by the signal receivers, and/or directional/distance information with respect to a detected spoofer transmission.

At a step 510, the LDAS master control station transmits a periodic LDAS update to any aircraft in its transmission range, whether or not said aircraft are within the LDAS protection region. For example, if one or more RFI control stations indicate a nonzero probability of potential GNSS spoofer or jammer presence within a predetermined time interval, the LDAS update may include details of the nonzero probability. If no nonzero probabilities are detected during the most recent transmission interval, the LDAS update may indicate the zero probability.

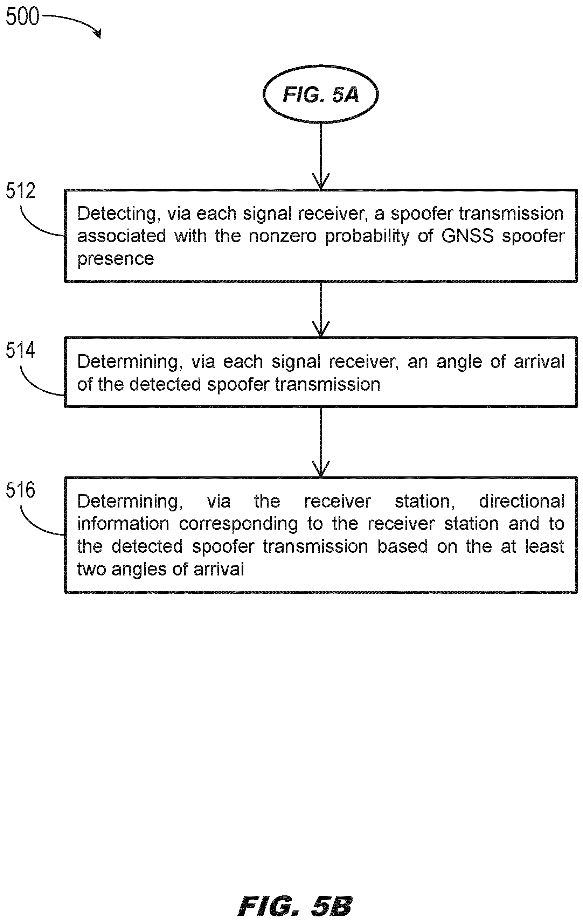

Referring also to FIG. 5B, the method 500 may include additional steps 512 through 516. At the step 512, if a nonzero probability of spoofer presence is determined at an RFI control station, the signal receivers of that RFI control station attempt to detect a spoofer transmission responsible for the GNSS measurement anomalies.

At a step 514, each signal receiver determines an angle of arrival of the detected spoofer transmission. For example, one or more signal receivers may correlate angle of arrival measurements and arrival times of the spoofer transmission at multiple Rx antennas with which the signal receiver is in communication.

At the step 516, the RFI control center (or the component signal receivers) determines directional and/or distance information between the RFI control center and a source of the spoofer transmission based on the correlated angles of arrival and arrival times at various component Rx antennas and the known spatial relationships between each true location. Directional and/or distance information may be shared with the master control center and/or included in VDB transmissions.

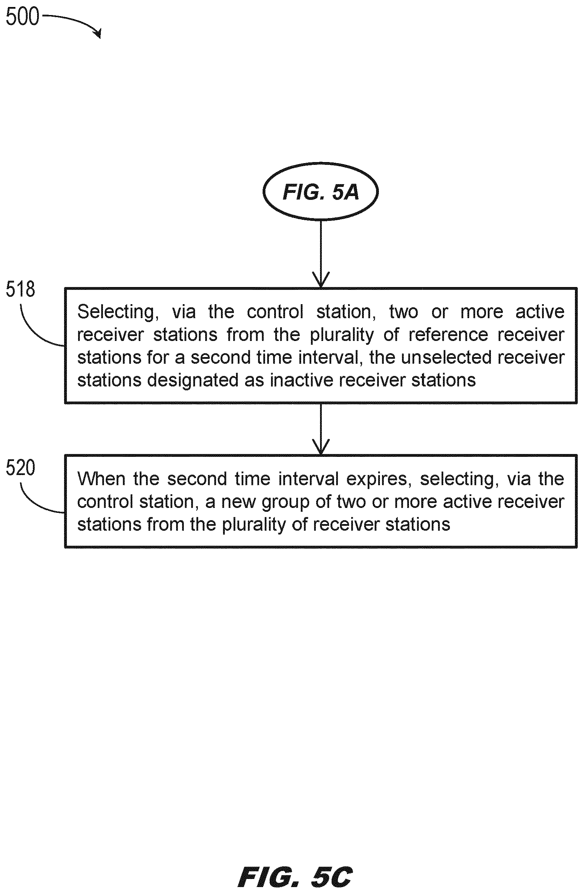

Referring also to FIG. 5C, the method 500 may include additional steps 518 and 520. At the step 518, the master control station selects active RFI control stations and/or signal receivers from the pool of RFI control stations and component signal receivers associated with the LDAS system. For example, active RFI control stations and/or signal receivers monitor and maintain the LDAS protection region while inactive receiver stations remain dormant for the selection period. In some embodiments, active RFI control stations may include partially active stations where some signal receivers participate in maintaining the LDAS protection region while other receivers remain inactive.

At the step 520, when the current selection period expires, the master control station selects a new set of active RFI control stations and/or signal receivers. For example, any selected set of active receiver stations may be placed so as to maintain at least the minimum effective range for the LDAS system, and any selected partially active RFI control station may maintain at least two active signal receivers.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A system (100) for local area detection and alerting of global navigation satellite system (GNSS) spoofing (LDAS), the LDAS system comprising:
at least one master control station (102) comprising:
one or more control processors (206);
a memory (208) in communication with the one or more control processors;
and
at least one transmitter (210) in communication with the one or more control processors, the transmitter configured for one or more VHF data broadcast (VDB) transmissions (212) via a transmit (Tx) antenna (122) having line of sight (LOS) range associated with a transmission region (120);
and
two or more radio frequency interference (RFI) control stations (106) in communication with the master control station and collectively defining a protection region (114) of the LDAS system, each RFI control station comprising:
at least two signal receivers (108) operatively coupled to at least two reception (Rx) antennas (110), each Rx antenna corresponding to a distinct height and to a true location;
each signal receiver configured to:
receive, via each Rx antenna, a plurality of positioning signals from a plurality of navigational satellites (118);
determine, based on the plurality of positioning signals, an absolute position of each Rx antenna;
determine a probability of global navigation satellite system (GNSS) spoofer presence by comparing the determined absolute position of each Rx antenna to the corresponding true location;
and
if the determined probability of GNSS spoofer presence is nonzero, notify the master control station of the nonzero probability;
wherein the master control station is configured to transmit at a regular time interval, via the one or more VDB transmissions, either the nonzero probability or a zero probability of GNSS spoofer presence.

2. The LDAS system (100) of claim 1, wherein:
the master control station (102) is configured to transmit at the regular time interval, via the one or more VDB transmissions (212), the zero probability of GNSS spoofer presence if none of the two or more reference RFI control stations (106) have indicated a nonzero probability within the most recent time interval.

3. The LDAS system (100) of claim 1 or 2, wherein:
each RFI control station (106) is configured to indicate a nonzero probability of GNSS spoofer presence when:
1) at least one determined absolute position of an Rx antenna (110) of the RFI control station deviates from the corresponding true location of the Rx antenna;
and
2) the deviation of the at least one absolute position from the true location is attributable to GNSS spoofing beyond a confidence bound.

4. The LDAS system (100) of claim 3, wherein the one or more VDB transmissions (212) include the confidence bound.

5. The LDAS system (100) of any preceding claim, wherein at least one signal receiver (108) is configured to:
detect a spoofer transmission associated with the nonzero probability;
determine an angle of arrival of the spoofer transmission relative to at least one Rx antenna (110);
determine directional information relative to the RFI control station (106) and to the spoofer transmission based on the at least one angle of arrival;
and
forward the directional information to the master control station (102).

6. The LDAS system (100) of claim 5, wherein the one or more VDB transmissions (212) include the directional information.

7. The LDAS system (100) of any preceding claim, wherein the regular time interval is a first time interval, the two or more RFI control stations (106) are active RFI control stations, and:
the master control station (102) is configured to select the two or more active RFI control stations from a group of three or more RFI control stations for a second time interval, the non-selected RFI control stations being inactive RFI control stations;
and
wherein the master control station is configured to select two or more new active RFI control stations from the group when the second time interval expires.

8. The LDAS system (100) of any preceding claim, wherein the two or more RFI control stations (106) include the at least one Rx antenna (110) fixed to a tethered aerial vehicle (112) configured for operation at a target altitude; and/or
wherein the LDAS system and the protection region (114) are associated with an airport (104) and wherein, optionally, the master control station (102) is physically disposed within the airport.

9. The LDAS system (100, 400) of any preceding claim, comprising a control station for local area detection and alerting of global navigation satellite system (GNSS) spoofing (LDAS), the LDAS control station (402) comprising:
at least one receiver/transmitter (210, 108) associated with a surveyed true location, and a target altitude each receiver/transmitter configured to:
receive a plurality of GNSS positioning signals from a plurality of navigational satellites (118);
determine, based on the plurality of GNSS positioning signals, an absolute position of the receiver/transmitter;
compare the determined absolute position to the surveyed true location of the receiver/transmitter;
if a deviation of the determined absolute position from the surveyed true location is attributable to GNSS spoofing beyond a confidence bound, indicate a nonzero probability of GNSS spoofer presence;
and
transmit at a regular time interval at least one LDAS update, each LDAS update indicative of:
a zero probability of GNSS spoofer presence;
or
if the nonzero probability has been indicated since the last LDAS update, the nonzero probability.

10. The LDAS system (100) of claim 9, wherein the at least one receiver/transmitter is attached to an antenna (110) extending above ground level or wherein the at least one receiver/transmitter is attached to an unmanned aerial vehicle (112) configured for operations at a target altitude.

11. The LDAS system (100) of claim 9 or 10, wherein the LDAS control station is a first control station of a network of two or more LDAS control stations, the LDAS update is a first LDAS update, and wherein the at least one receiver/transmitter is configured to:
transmit the at least one first LDAS update to at least one second LDAS control station (402a) of the network;
and
receive at least one second LDAS update from the at least one second LDAS control station.

12. A method (500) for local area detection and alerting of global navigation satellite system (GNSS) spoofing (LDAS), the method comprising:
receiving (502), via at least two signal receivers (108) associated with a radio frequency interference (RFI) control station (106), each signal receiver communicatively coupled to at least two receiver (Rx) antennas (110), each Rx antenna corresponding to a surveyed true location and to a distinct height, a plurality of GNSS positioning signals transmitted by a plurality of navigational satellites (118);
determining (504), via each signal receiver and based on the one or more received positioning signals, an absolute position of each Rx antenna;
determining (506), via each signal receiver, a probability of GNSS spoofer presence by comparing the determined absolute position of each Rx antenna to the corresponding surveyed true location;
if the probability determined by at least one signal receiver is nonzero, notifying (508), via the RFI control station, a master control station (102) of the nonzero probability, the master control station comprising one or more control processors (206), a memory (208), and at least one transmitter (210);
and
transmitting (510), via the transmitter of the master control station, at least one VHF data broadcast (VDB) transmission (212) at a regular time interval, the at least one VDB transmission comprising one of:
a zero probability of GNSS spoofer presence;
or
the nonzero probability of GNSS spoofer presence.

13. The method (500) of claim 12, wherein determining, via each signal receiver (108), a probability of GNSS spoofer presence by comparing the determined absolute position of each Rx antenna (110) to the corresponding surveyed true location includes:
determining a nonzero probability of GNSS spoofer presence when:
1) at least one determined absolute position of an Rx antenna deviates from the corresponding surveyed true location of the Rx antenna;
and
2) the deviation of the at least one determined absolute position is attributable to GNSS spoofing beyond a confidence bound; and
wherein, optionally, transmitting, via the master control station (102), at least one VHF data broadcast (VDB) transmission (212) at a regular time interval, includes transmitting the confidence bound.

14. The method (500) of claim 12 or 13, further comprising:
detecting (512), via each signal receiver (108), a spoofer transmission associated with the nonzero probability of GNSS spoofer presence;
determining (514), via each signal receiver, an angle of arrival of the detected spoofer transmission;
and
determining (516), via the RFI control station (106), directional information corresponding to the RFI control station and to the detected spoofer transmission based on the at least two angles of arrival; and
wherein, optionally, transmitting, via the master control station (102), at least one VHF data broadcast (VDB) transmission (212) at a regular time interval includes transmitting the directional information.

15. The method (500) of claim 12, 13 or 14, wherein the RFI control station (106) is an active RFI control station and the regular time interval is a first time interval, further comprising:
selecting (518), via the master control station (102), two or more active RFI control stations from the plurality of RFI control stations for a second time interval, the unselected RFI control stations designated as inactive RFI control stations;
and
when the second time interval expires, selecting, via the master control station, a new group of two or more active RFI control stations from the plurality of RFI control stations.

## Patentansprüche

1. System (100) zur lokalen Bereichserfassung und Warnung vor Spoofing eines globalen Navigationssatellitensystems (GNSS) (LDAS), wobei das LDAS-System umfasst:
mindestens eine Hauptsteuerstation (102), umfassend:
einen oder mehrere Steuerprozessoren (206);
einen Speicher (208), der mit dem einen oder den mehreren Steuerprozessoren in Kommunikation steht;
und
mindestens einen Sender (210), der mit dem einen oder den mehreren Steuerprozessoren in Kommunikation steht, wobei der Sender für eine oder mehrere VHF-Datenrundfunk-Übertragungen (VDB-Übertragungen) (212) über eine Sendeantenne (Tx-Antenne) (122) konfiguriert ist, die eine Sichtlinienreichweite (LOS-Reichweite) aufweist, die einem Übertragungsbereich (120) zugeordnet ist;
und
zwei oder mehr Hochfrequenzstörungs-Steuerstationen (RFI-Steuerstationen) (106), die mit der Hauptsteuerstation in Kommunikation stehen und gemeinsam einen Schutzbereich (114) des LDAS-Systems definieren, wobei jede RFI-Steuerstation umfasst: mindestens zwei Signalempfänger (108), die mit mindestens zwei Empfangsantennen (Rx-Antennen) (110) wirkgekoppelt sind, wobei jede Rx-Antenne einer unterschiedlichen Höhe und einem wahren Standort entspricht;
wobei jeder Signalempfänger konfiguriert ist, um:
über jede Rx-Antenne eine Mehrzahl von Positionierungssignalen von einer Mehrzahl von Navigationssatelliten (118) zu empfangen; auf der Grundlage der Mehrzahl von Positionierungssignalen eine absolute Position jeder Rx-Antenne zu bestimmen;
eine Wahrscheinlichkeit eines Vorhandenseins eines Spoofers eines globalen Navigationssatellitensystems (GNSS) durch Vergleichen der bestimmten absoluten Position jeder Rx-Antenne mit dem entsprechenden wahren Standort zu bestimmen;
und
falls die bestimmte Wahrscheinlichkeit des Vorhandenseins eines GNSS-Spoofers ungleich null ist, die Hauptsteuerstation über die Wahrscheinlichkeit ungleich null zu benachrichtigen;
wobei die Hauptsteuerstation konfiguriert ist, um in einem regelmäßigen Zeitintervall über die eine oder die mehreren VDB-Übertragungen entweder die Wahrscheinlichkeit ungleich null oder eine Wahrscheinlichkeit von null des Vorhandenseins eines GNSS-Spoofers zu übertragen.

2. LDAS-System (100) nach Anspruch 1, wobei:
die Hauptsteuerstation (102) konfiguriert ist, um in dem regelmäßigen Zeitintervall über die eine oder die mehreren VDB-Übertragungen (212) die Wahrscheinlichkeit von null des Vorhandenseins eines GNSS-Spoofers zu übertragen, falls keine der zwei oder mehr Referenz-RFI-Steuerstationen (106) innerhalb des jüngsten Zeitintervalls eine Wahrscheinlichkeit ungleich null angezeigt hat.

3. LDAS-System (100) nach Anspruch 1 oder 2, wobei:
jede RFI-Steuerstation (106) konfiguriert ist, um eine Wahrscheinlichkeit ungleich null des Vorhandenseins eines GNSS-Spoofers anzuzeigen, wenn:
1) mindestens eine bestimmte absolute Position einer Rx-Antenne (110) der RFI-Steuerstation von dem entsprechenden wahren Standort der Rx-Antenne abweicht;
und
2) die Abweichung der mindestens einen absoluten Position von dem wahren Standort über eine Konfidenzgrenze hinaus auf GNSS-Spoofing zurückzuführen ist.

4. LDAS-System (100) nach Anspruch 3, wobei die eine oder die mehreren VDB-Übertragungen (212) die Konfidenzgrenze einschließen.

5. LDAS-System (100) nach einem der vorhergehenden Ansprüche, wobei mindestens ein Signalempfänger (108) konfiguriert ist, um:
eine Spoofer-Übertragung zu erfassen, die der Wahrscheinlichkeit ungleich null zugeordnet ist;
einen Einfallswinkel der Spoofer-Übertragung relativ zu mindestens einer Rx-Antenne (110) zu bestimmen;
Richtungsinformationen relativ zu der RFI-Steuerstation (106) und zu der Spoofer-Übertragung auf der Grundlage des mindestens einen Einfallswinkels zu bestimmen;
und
die Richtungsinformationen an die Hauptsteuerstation (102) weiterzuleiten.

6. LDAS-System (100) nach Anspruch 5, wobei die eine oder die mehreren VDB-Übertragungen (212) die Richtungsinformationen einschließen.

7. LDAS-System (100) nach einem der vorhergehenden Ansprüche, wobei das regelmäßige Zeitintervall ein erstes Zeitintervall ist, die zwei oder mehr RFI-Steuerstationen (106) aktive RFI-Steuerstationen sind, und:
die Hauptsteuerstation (102) konfiguriert ist, um die zwei oder mehr aktiven RFI-Steuerstationen aus einer Gruppe von drei oder mehr RFI-Steuerstationen für ein zweites Zeitintervall auszuwählen, wobei die nicht ausgewählten RFI-Steuerstationen inaktive RFI-Steuerstationen sind;
und
wobei die Hauptsteuerstation konfiguriert ist, um zwei oder mehr neue aktive RFI-Steuerstationen aus der Gruppe auszuwählen, wenn das zweite Zeitintervall abläuft.

8. LDAS-System (100) nach einem der vorhergehenden Ansprüche, wobei die zwei oder mehr RFI-Steuerstationen (106) die mindestens eine Rx-Antenne (110) einschließen, die an einem angebundenen Luftfahrzeug (112) befestigt ist, das für einen Betrieb in einer Zielhöhe konfiguriert ist; und/oder wobei das LDAS-System und der Schutzbereich (114) einem Flughafen (104) zugeordnet sind und wobei optional die Hauptsteuerstation (102) physisch innerhalb des Flughafens angeordnet ist.

9. LDAS-System (100, 400) nach einem der vorhergehenden Ansprüche, umfassend eine Steuerstation zur lokalen Bereichserfassung und Warnung vor Spoofing eines globalen Navigationssatellitensystems (GNSS) (LDAS), wobei die LDAS-Steuerstation (402) umfasst:
mindestens einen Empfänger/Sender (210, 108), der einem vermessenen wahren Standort zugeordnet ist, und eine Zielhöhe, wobei jeder Empfänger/Sender konfiguriert ist, um:
eine Mehrzahl von GNSS-Positionierungssignalen von einer Mehrzahl von Navigationssatelliten (118) zu empfangen;
auf der Grundlage der Mehrzahl von GNSS-Positionierungssignalen eine absolute Position des Empfängers/Senders zu bestimmen;
die bestimmte absolute Position mit dem vermessenen wahren Standort des Empfängers/Senders zu vergleichen;
falls eine Abweichung der bestimmten absoluten Position von dem vermessenen wahren Standort über eine Konfidenzgrenze hinaus auf GNSS-Spoofing zurückzuführen ist, eine Wahrscheinlichkeit ungleich null des Vorhandenseins eines GNSS-Spoofers anzuzeigen; und
in einem regelmäßigen Zeitintervall mindestens eine LDAS-Aktualisierung zu übertragen, wobei jede LDAS-Aktualisierung anzeigt:
eine Wahrscheinlichkeit von null des Vorhandenseins eines GNSS-Spoofers;
oder
falls die Wahrscheinlichkeit ungleich null seit der letzten LDAS-Aktualisierung angezeigt wurde, die Wahrscheinlichkeit ungleich null.

10. LDAS-System (100) nach Anspruch 9, wobei der mindestens eine Empfänger/Sender an einer Antenne (110) befestigt ist, die sich über Bodenniveau erstreckt, oder wobei der mindestens eine Empfänger/Sender an einem unbemannten Luftfahrzeug (112) befestigt ist, das für einen Betrieb in einer Zielhöhe konfiguriert ist.

11. LDAS-System (100) nach Anspruch 9 oder 10, wobei die LDAS-Steuerstation eine erste Steuerstation eines Netzwerks von zwei oder mehr LDAS-Steuerstationen ist, die LDAS-Aktualisierung eine erste LDAS-Aktualisierung ist, und wobei der mindestens eine Empfänger/Sender konfiguriert ist, um:
die mindestens eine erste LDAS-Aktualisierung an mindestens eine zweite LDAS-Steuerstation (402a) des Netzwerks zu übertragen; und
mindestens eine zweite LDAS-Aktualisierung von der mindestens einen zweiten LDAS-Steuerstation zu empfangen.

12. Verfahren (500) zur lokalen Bereichserfassung und Warnung vor Spoofing eines globalen Navigationssatellitensystems (GNSS) (LDAS), wobei das Verfahren umfasst:
Empfangen (502), über mindestens zwei Signalempfänger (108), die einer Hochfrequenzstörungs-Steuerstation (RFI-Steuerstation) (106) zugeordnet sind, wobei jeder Signalempfänger kommunikativ mit mindestens zwei Empfängerantennen (Rx-Antennen) (110) gekoppelt ist, wobei jede Rx-Antenne einem vermessenen wahren Standort und einer unterschiedlichen Höhe entspricht, einer Mehrzahl von GNSS-Positionierungssignalen, die von einer Mehrzahl von Navigationssatelliten (118) übertragen werden;
Bestimmen (504), über jeden Signalempfänger und auf der Grundlage des einen oder der mehreren empfangenen Positionierungssignale, einer absoluten Position jeder Rx-Antenne;
Bestimmen (506), über jeden Signalempfänger, einer Wahrscheinlichkeit des Vorhandenseins eines GNSS-Spoofers durch Vergleichen der bestimmten absoluten Position jeder Rx-Antenne mit dem entsprechenden vermessenen wahren Standort;
falls die durch mindestens einen Signalempfänger bestimmte Wahrscheinlichkeit ungleich null ist, Benachrichtigen (508), über die RFI-Steuerstation, einer Hauptsteuerstation (102) über die Wahrscheinlichkeit ungleich null, wobei die Hauptsteuerstation einen oder mehrere Steuerprozessoren (206), einen Speicher (208) und mindestens einen Sender (210) umfasst; und
Übertragen (510), über den Sender der Hauptsteuerstation, mindestens einer VHF-Datenrundfunk-Übertragung (VDB-Übertragung) (212) in einem regelmäßigen Zeitintervall, wobei die mindestens eine VDB-Übertragung eines der Folgenden umfasst:
eine Wahrscheinlichkeit von null des Vorhandenseins eines GNSS-Spoofers;
oder
die Wahrscheinlichkeit ungleich null des Vorhandenseins eines GNSS-Spoofers.

13. Verfahren (500) nach Anspruch 12, wobei das Bestimmen, über jeden Signalempfänger (108), einer Wahrscheinlichkeit des Vorhandenseins eines GNSS-Spoofers durch Vergleichen der bestimmten absoluten Position jeder Rx-Antenne (110) mit dem entsprechenden vermessenen wahren Standort einschließt:
Bestimmen einer Wahrscheinlichkeit ungleich null des Vorhandenseins eines GNSS-Spoofers, wenn:
1) mindestens eine bestimmte absolute Position einer Rx-Antenne von dem entsprechenden vermessenen wahren Standort der Rx-Antenne abweicht;
und
2) die Abweichung der mindestens einen bestimmten absoluten Position über eine Konfidenzgrenze hinaus auf GNSS-Spoofing zurückzuführen ist; und
wobei optional das Übertragen, über die Hauptsteuerstation (102), mindestens einer VHF-Datenrundfunk-Übertragung (VDB-Übertragung) (212) in einem regelmäßigen Zeitintervall das Übertragen der Konfidenzgrenze einschließt.

14. Verfahren (500) nach Anspruch 12 oder 13, ferner umfassend:
Erfassen (512), über jeden Signalempfänger (108), einer Spoofer-Übertragung, die der Wahrscheinlichkeit ungleich null des Vorhandenseins eines GNSS-Spoofers zugeordnet ist;
Bestimmen (514), über jeden Signalempfänger, eines Einfallswinkels der erfassten Spoofer-Übertragung;
und
Bestimmen (516), über die RFI-Steuerstation (106), von Richtungsinformationen, die der RFI-Steuerstation und der erfassten Spoofer-Übertragung entsprechen, auf der Grundlage der mindestens zwei Einfallswinkel; und
wobei optional das Übertragen, über die Hauptsteuerstation (102), mindestens einer VHF-Datenrundfunk-Übertragung (VDB-Übertragung) (212) in einem regelmäßigen Zeitintervall das Übertragen der Richtungsinformationen einschließt.

15. Verfahren (500) nach Anspruch 12, 13 oder 14, wobei die RFI-Steuerstation (106) eine aktive RFI-Steuerstation ist und das regelmäßige Zeitintervall ein erstes Zeitintervall ist, ferner umfassend:
Auswählen (518), über die Hauptsteuerstation (102), von zwei oder mehr aktiven RFI-Steuerstationen aus der Mehrzahl von RFI-Steuerstationen für ein zweites Zeitintervall, wobei die nicht ausgewählten RFI-Steuerstationen als inaktive RFI-Steuerstationen bezeichnet werden;
und
wenn das zweite Zeitintervall abläuft, Auswählen, über die Hauptsteuerstation, einer neuen Gruppe von zwei oder mehr aktiven RFI-Steuerstationen aus der Mehrzahl von RFI-Steuerstationen.

## Revendications

1. Système (100) de détection de zone locale et d'alerte de mystification de système mondial de navigation par satellite (GNSS) (LDAS), le système LDAS comprenant :
au moins une station de commande principale (102) comprenant :
un ou plusieurs processeurs de commande (206) ;
une mémoire (208) en communication avec les un ou plusieurs processeurs de commande ;
et
au moins un émetteur (210) en communication avec les un ou plusieurs processeurs de commande, l'émetteur étant configuré pour une ou plusieurs transmissions de diffusion de données VHF (VDB) (212) via une antenne d'émission (Tx) (122) ayant une portée de visibilité directe (LOS) associée à une région de transmission (120) ;
et
deux stations de commande des interférences radioélectriques (RFI) ou plus (106) en communication avec la station de commande principale et définissant collectivement une région de protection (114) du système LDAS, chaque station de commande RFI comprenant :
au moins deux récepteurs de signaux (108) couplés de manière opérationnelle à au moins deux antennes de réception (Rx) (110), chaque antenne Rx correspondant à une hauteur distincte et à un emplacement réel ;
chaque récepteur de signaux étant configuré pour :
recevoir, via chaque antenne Rx, une pluralité de signaux de positionnement à partir d'une pluralité de satellites de navigation (118) ;
déterminer, sur la base de la pluralité des signaux de positionnement, une position absolue de chaque antenne Rx ;
déterminer une probabilité de présence d'un dispositif de mystification de système mondial de navigation par satellite (GNSS) en comparant la position absolue déterminée de chaque antenne Rx au niveau de l'emplacement réel correspondant ;
et
si la probabilité déterminée de présence d'un dispositif de mystification GNSS est non nulle, notifier la station de commande principale de la probabilité non nulle ;
dans lequel la station de commande principale est configurée pour transmettre à un intervalle de temps régulier, via les une ou plusieurs transmissions VDB, soit la probabilité non nulle, soit une probabilité nulle de présence d'un dispositif de mystification GNSS.

2. Système LDAS (100) selon la revendication 1, dans lequel :
la station de commande principale (102) est configurée pour transmettre à l'intervalle de temps régulier, via les une ou plusieurs transmissions VDB (212), la probabilité nulle de présence d'un dispositif de mystification GNSS si aucune des deux stations de commande RFI de référence ou plus (106) n'a indiqué une probabilité non nulle au cours de l'intervalle de temps le plus récent.

3. Système LDAS (100) selon la revendication 1 ou 2, dans lequel :
chaque station de commande RFI (106) est configurée pour indiquer une probabilité non nulle de présence d'un dispositif de mystification GNSS lorsque :
1) au moins une position absolue déterminée d'une antenne Rx (110) de la station de commande RFI s'écarte de l'emplacement réel correspondant de l'antenne Rx ;
et
2) l'écart de l'au moins une position absolue par rapport à l'emplacement réel est attribuable à une mystification GNSS au-delà d'une limite de confiance.

4. Système LDAS (100) selon la revendication 3, dans lequel les une ou plusieurs transmissions VDB (212) comportent la limite de confiance.

5. Système LDAS (100) selon une quelconque revendication précédente, dans lequel au moins un récepteur de signaux (108) est configuré pour :
détecter une transmission de dispositif de mystification associée à la probabilité non nulle ;
déterminer un angle d'arrivée de la transmission de dispositif de mystification par rapport à au moins une antenne Rx (110) ;
déterminer des informations directionnelles relatives à la station de commande RFI (106) et à la transmission de dispositif de mystification sur la base de l'au moins un angle d'arrivée ; et
transmettre les informations directionnelles à la station de commande principale (102).

6. Système LDAS (100) selon la revendication 5, dans lequel les une ou plusieurs transmissions VDB (212) comportent les informations directionnelles.

7. Système LDAS (100) selon une quelconque revendication précédente, dans lequel l'intervalle de temps régulier est un premier intervalle de temps, les deux stations de commande RFI ou plus (106) sont des stations de commande RFI actives, et :
la station de commande principale (102) est configurée pour sélectionner les deux stations de commande RFI actives ou plus parmi un groupe de trois stations de commande RFI ou plus pour un second intervalle de temps, les stations de commande RFI non sélectionnées étant des stations de commande RFI inactives ; et
dans lequel la station de commande principale est configurée pour sélectionner deux nouvelles stations de commande RFI actives ou plus parmi le groupe lorsque le second intervalle de temps expire.

8. Système LDAS (100) selon une quelconque revendication précédente, dans lequel les deux stations de commande RFI ou plus (106) comportent l'au moins une antenne Rx (110) fixée à un véhicule aérien captif (112) configuré pour fonctionner à une altitude cible ; et/ou
dans lequel le système LDAS et la région de protection (114) sont associés à un aéroport (104) et dans lequel, éventuellement, la station de commande principale (102) est physiquement disposée à l'intérieur de l'aéroport.

9. Système LDAS (100, 400) selon une quelconque revendication précédente, comprenant une station de commande pour la détection de zone locale et l'alerte de mystification de système mondial de navigation par satellite (GNSS) (LDAS), la station de commande LDAS (402) comprenant :
au moins un récepteur/émetteur (210, 108) associé à un emplacement réel relevé et à une altitude cible, chaque récepteur/émetteur étant configuré pour :
recevoir une pluralité de signaux de positionnement GNSS à partir d'une pluralité de satellites de navigation (118) ;
déterminer, sur la base de la pluralité des signaux de positionnement GNSS, une position absolue du récepteur/émetteur ;
comparer la position absolue déterminée à l'emplacement réel relevé du récepteur/émetteur ;
si un écart entre la position absolue déterminée et l'emplacement réel relevé est attribuable à une mystification GNSS au-delà d'une limite de confiance, indiquer une probabilité non nulle de présence d'un dispositif de mystification GNSS ; et
transmettre à un intervalle de temps régulier au moins une mise à jour LDAS, chaque mise à jour LDAS indiquant :
une probabilité nulle de présence d'un dispositif de mystification GNSS ;
ou
si la probabilité non nulle a été indiquée depuis la dernière mise à jour LDAS, la probabilité non nulle.

10. Système LDAS (100) selon la revendication 9, dans lequel l'au moins un récepteur/émetteur est fixé à une antenne (110) s'étendant au-dessus du niveau du sol ou dans lequel l'au moins un récepteur/émetteur est fixé à un véhicule aérien sans pilote (112) configuré pour fonctionner à une altitude cible.

11. Système LDAS (100) selon la revendication 9 ou 10, dans lequel la station de commande LDAS est une première station de commande d'un réseau de deux stations de commande LDAS ou plus, la mise à jour LDAS est une première mise à jour LDAS, et dans lequel l'au moins un récepteur/émetteur est configuré pour :
transmettre l'au moins une première mise à jour LDAS à au moins une seconde station de commande LDAS (402a) du réseau ;
et
recevoir au moins une seconde mise à jour LDAS à partir de l'au moins une seconde station de commande LDAS.

12. Procédé (500) de détection de zone locale et d'alerte de mystification de système mondial de navigation par satellite (GNSS) (LDAS), le procédé comprenant :
la réception (502), via au moins deux récepteurs de signaux (108) associés à une station de commande des interférences radioélectriques (RFI) (106), chaque récepteur de signaux étant couplé de manière communicative à au moins deux antennes de réception (Rx) (110), chaque antenne Rx correspondant à un emplacement réel relevé et à une hauteur distincte, d'une pluralité de signaux de positionnement GNSS transmis par une pluralité de satellites de navigation (118) ;
la détermination (504), via chaque récepteur de signaux et sur la base des un ou plusieurs signaux de positionnement reçus, d'une position absolue de chaque antenne Rx ;
la détermination (506), via chaque récepteur de signaux, d'une probabilité de présence d'un dispositif de mystification GNSS en comparant la position absolue déterminée de chaque antenne Rx à l'emplacement réel relevé correspondant ;
si la probabilité déterminée par au moins un récepteur de signaux est non nulle, la notification (508), via la station de commande RFI, d'une station de commande principale (102) de la probabilité non nulle, la station de commande principale comprenant un ou plusieurs processeurs de commande (206), une mémoire (208) et au moins un émetteur (210) ;
et
la transmission (510), via l'émetteur de la station de commande principale, d'au moins une transmission de diffusion de données VHF (VDB) (212) à un intervalle de temps régulier, l'au moins une transmission VDB comprenant l'un des éléments suivants :
une probabilité nulle de présence d'un dispositif de mystification GNSS ;
ou
la probabilité non nulle de présence d'un dispositif de mystification GNSS.

13. Procédé (500) selon la revendication 12, dans lequel la détermination, via chaque récepteur de signaux (108), d'une probabilité de présence d'un dispositif de mystification GNSS en comparant la position absolue déterminée de chaque antenne Rx (110) au niveau de l'emplacement réel relevé correspondant comporte :
la détermination d'une probabilité non nulle de présence d'un dispositif de mystification GNSS lorsque :
1) au moins une position absolue déterminée d'une antenne Rx s'écarte de l'emplacement réel relevé correspondant de l'antenne Rx ;
et
2) l'écart de l'au moins une position absolue déterminée est attribuable à une mystification GNSS au-delà d'une limite de confiance ; et
dans lequel, éventuellement, la transmission, via la station de commande principale (102), d'au moins une transmission de diffusion de données VHF (VDB) (212) à un intervalle de temps régulier comporte la transmission de la limite de confiance.

14. Procédé (500) selon la revendication 12 ou 13, comprenant en outre :
la détection (512), via chaque récepteur de signaux (108), d'une transmission de dispositif de mystification associée à la probabilité non nulle de présence d'un dispositif de mystification GNSS ;
la détermination (514), via chaque récepteur de signaux, d'un angle d'arrivée de la transmission de dispositif de mystification détectée ;
et
la détermination (516), via la station de commande RFI (106), d'informations directionnelles correspondant à la station de commande RFI et à la transmission de dispositif de mystification détectée sur la base des au moins deux angles d'arrivée ; et
dans lequel, éventuellement, la transmission, via la station de commande principale (102), d'au moins une transmission de diffusion de données VHF (VDB) (212) à un intervalle de temps régulier comporte la transmission des informations directionnelles.

15. Procédé (500) selon la revendication 12, 13 ou 14, dans lequel la station de commande RFI (106) est une station de commande RFI active et l'intervalle de temps régulier est un premier intervalle de temps, comprenant en outre :
la sélection (518), via la station de commande principale (102), de deux stations de commande RFI actives ou plus parmi la pluralité de stations de commande RFI pour un second intervalle de temps, les stations de commande RFI non sélectionnées étant désignées comme stations de commande RFI inactives ;
et
lorsque le second intervalle de temps expire, la sélection, via la station de commande principale, d'un nouveau groupe de deux stations de commande RFI actives ou plus parmi la pluralité de stations de commande RFI.
